# EUROPEAN PATENT APPLICATION

(11) **EP 4 730 541 A1**
(43) Date of publication of application: **22.04.2026**
(21) Application number: 24822466.9
(22) Date of filing: 15.05.2024
(51) Int. Cl.: H01M 50/463

(54) **BATTERY CELL, BATTERY, AND ELECTRICAL DEVICE**

(30) Priority: 13.06.2023 CN 202310695646
(71) Applicant: Ningde Amperex Technology Limited, Ningde, Fujian 352100 (CN)
(72) Inventor: CAO, Weiyi, Ningde, Fujian 352100 (CN); WU, Hua, Ningde, Fujian 352100 (CN)
(74) Representative: Dehns Germany Partnerschaft mbB
(86) International application number: PCT/CN2024/093415
(87) International publication number: WO 2024/255514

(57) **Abstract**

This application discloses a cell, a battery, and an electric device. The cell includes an electrode assembly and an electrode terminal. The electrode assembly comprises a top and a bottom arranged along a first direction. The electrode terminal is configured to connect to the top. The electrode assembly is formed by winding or stacking, and the electrode assembly includes N layers of separators, N being a natural number greater than or equal to 3. Each layer of separator includes a first extension portion extending out of the bottom along the first direction. The N layers of first extension portions are arranged along a second direction. Along the second direction, the first extension portion of the first layer to the first extension portion of the (N-1)-th layer are bent, with adjacent ones of the first extension portions connected. The separator includes a second extension portion extending out of the top. The second extension portion is configured to connect to the electrode terminal. This application is conducive to increasing the energy density of the cell and the tensile strength of the electrode terminal.

## Description

### TECHNICAL FIELD

This application relates to the field of energy storage technologies, and in particular, to a cell, a battery, and an electric device.

### BACKGROUND

Batteries are currently widely used in fields such as drones, electric vehicles, and electronic devices. In the existing current cells, a winding adhesive is typically used to adhere to a separator extending out of the electrode plate, thus fixing the separator. However, the winding adhesive occupies space in the thickness direction of the cell, reducing the energy density of the cell. Additionally, the current cells are typically subjected to multi-layer electrode terminal folding. During the folding process, stress accumulates inside the multi-layer electrode terminals. When the cell cycles, the electrode assembly swells and pulls the electrode terminals, easily causing the electrode terminals to break and ultimately resulting in cell capacity loss.

### SUMMARY

In view of the above, it is necessary to provide a cell, a battery, and an electric device that can improve the tensile strength of the electrode terminals and the energy density of the cell.

Some embodiments of this application provide a cell, including an electrode assembly and an electrode terminal. The electrode assembly comprises a top and a bottom arranged along a first direction. The electrode terminal is configured to connect to the top. The electrode assembly is formed by winding or stacking. The electrode assembly includes N layers of separators, N being a natural number greater than or equal to 3. Each layer of separator includes a first extension portion extending out of the bottom along the first direction. The N layers of first extension portions are arranged along a second direction. Along the second direction, the first extension portion of the first layer to the first extension portion of the (N-1)-th layer are bent, with adjacent ones of the first extension portions connected. The separator includes a second extension portion extending out of the top along a direction opposite to the first direction, the second extension portion being connected to the electrode terminal. The second direction is a thickness direction of the electrode assembly. In this application, the first extension portions of the separator are sequentially bent along the second direction, with adjacent ones of the first extension portions connected, and the second extension portion is configured to connect to the electrode terminal, thus fixing the separator, reducing the space occupied by the cell in the second direction, and improving space utilization. This is conducive to increasing the energy density of the cell and enhancing the tensile strength of the electrode terminal, thus reducing the risk of breakage of the electrode terminal caused by swelling of the cell.

Optionally, in some embodiments of this application, in the direction opposite to the first direction, a projection of any one of the first extension portions overlaps a projection of an adjacent first extension portion, which can increase an connection area between adjacent first extension portions, enhancing the connection strength between adjacent first extension portions. A larger connection area between adjacent first extension portions indicates a larger bending amplitude of the first extension portion in the first direction, reducing the space occupied by the first extension portion in the first direction.

Optionally, in some embodiments of this application, at least part of the second extension portion connected to the electrode terminal is configured to connect to another second extension portion on the adjacent electrode terminal, which can further enhance the tensile strength of the electrode terminal, further reducing the risk of breakage of the electrode terminal caused by swelling of the cell.

Optionally, in some embodiments of this application, the electrode assembly includes a first side portion and a second side portion arranged along a third direction. When the electrode assembly is stacked, each layer of separator includes a third extension portion extending out of the first side portion in a direction opposite to the third direction. The N layers of third extension portions are arranged along the second direction. Along the second direction, the third extension portion of the first layer to the third extension portion of the (N-1)-th layer are bent, with adjacent ones of the third extension portions connected. Each two of the first direction, second direction, and third direction are mutually perpendicular, which achieves the fixation of the separator extending out of the first side portion, reducing the space occupied by the cell in the second direction and improving space utilization, thus helping to increase the energy density of the cell.

Optionally, in some embodiments of this application, each layer of separator includes a fourth extension portion extending out of the second side portion along the third direction. The N layers of fourth extension portions are arranged along the second direction. Along the second direction, the fourth extension portion of the first layer to the fourth extension portion of the (N-1)-th layer are bent, with adjacent ones of the fourth extension portions connected, achieving the fixation of the separator extending out of the second side portion, further reducing the space occupied by the cell in the second direction and improving space utilization. This is further conducive to increasing the energy density of the cell.

Optionally, in some embodiments of this application, along the first direction, a length of the first extension portion of the N-th layer is less than the length of the first extension portion of any one of the first layer to the (N-1)-th layer, reducing the space occupied by the first extension portion of the N-th layer, which is conducive to improving space utilization.

Optionally, in some embodiments of this application, a length L₁ of each layer of first extension portion from the first layer to the (N-1)-th layer extending out of the bottom along the first direction satisfies 0.2 mm ≤ L₁ < 2 mm, which is further conducive to reducing the space occupied by the first extension portions.

Optionally, in some embodiments of this application, a length L₂ of each layer of first extension portion extending out of the bottom after bent and connected along the first direction satisfies 0.1 mm ≤ L₂ ≤ 0.8 mm, further reducing the space occupied by the first extension portion extending out of the negative electrode plate, which can increase the space between the cell casing and the first extension portion, helping to improve space utilization.

Optionally, in some embodiments of this application, the cell includes a cell casing and an electrolyte. The electrode assembly is arranged within the cell casing. The cell casing includes a first wall and a second wall arranged along the first direction. Part of the electrolyte is located between the second wall and the first extension portion. Along the first direction, a distance D₁ between the second wall and the first extension portion satisfies 0 mm ≤ D₁ ≤ 0.4 mm, which can reduce the distance between the second wall and the first extension portion along the first direction, improving space utilization, reducing the length of the cell along the first direction, and helping to increase the energy density of the cell.

Optionally, in some embodiments of this application, a length L₂ of each layer of first extension portion extending out of the bottom after bent and connected along the first direction satisfies 0.1 mm ≤ L₂ ≤ 0.3 mm, further reducing the space occupied by the first extension portion extending out of the negative electrode plate, and further increasing the space between the cell casing and the first extension portion, thereby further improving space utilization.

Optionally, in some embodiments of this application, the cell includes a cell casing and an electrolyte. The electrode assembly is arranged within the cell casing. The cell casing includes a first wall and a second wall arranged along the first direction. Part of the electrolyte is located between the second wall and the first extension portion. Along the first direction, a distance D₁ between the second wall and the first extension portion satisfies 0 mm ≤ D₁ ≤ 0.7 mm. With a fixed distance between the second wall and the negative electrode plate, a smaller length L₂ of the first extension portion extending out of the bottom indicates a larger space between the second wall and the first extension portion, increasing the space for storing the electrolyte, which is more conducive to reducing the risk of electrolyte swelling.

Optionally, in some embodiments of this application, the first extension portion is provided with a first adhesive layer, such that adjacent ones of the first extension portions are adhesively arranged, facilitating the connection between adjacent first extension portions.

Optionally, in some embodiments of this application, the electrode assembly includes a positive electrode plate and a negative electrode plate. The positive electrode plate, the separator, and the negative electrode plate are sequentially wound or stacked. The positive electrode plate includes a first current collector and a first active substance layer. Along the thickness direction of the electrode assembly, the first active substance layer is configured to connect to surfaces of two sides of the first current collector. A first insulating adhesive layer is disposed on both sides of part of the first current collector extending out of the first active substance layer. The first insulating adhesive layer can protect the separator, reducing the risk that the burrs on the part of the first current collector extending out of the first active substance layer pierce the separator and cause short circuit.

An embodiment of this application further provides a battery, including the cell according to any one of the foregoing embodiments.

An embodiment of this application further provides an electric device, including the battery according to any one of the foregoing embodiments.

### BRIEF DESCRIPTION OF DRAWINGS

FIG. 1 is a schematic exploded view of a cell according to some embodiments.
FIG. 2 is a schematic cross-sectional view of a cell along line II-II according to some embodiments.
FIG. 3 is a schematic cross-sectional view of a cell along line II-II according to some other embodiments.
FIG. 4 is a schematic cross-sectional view of a cell along line III-III according to some embodiments.
FIG. 5 is a structural schematic diagram of a battery and an electric device according to some embodiments.

Reference signs of main components:
Cell 100
Electrode assembly 10
Top 10a
Bottom 10b
First side portion 10c
Second side portion 10d
Separator 11
First-layer separator 11a
Second-layer separator 11b
Third-layer separator 11c
Fourth-layer separator 11d
Fifth-layer separator 11e
Sixth-layer separator 11f
Seventh-layer separator11g
Eighth-layer separator 11h
First extension portion 111
First section 111a
Second section 111b
Second extension portion 112
Third extension portion113
Fourth extension portion 114
Positive electrode plate 12
First positive electrode plate 12a
Second positive electrode plate 12b
Third positive electrode plate 12c
First current collector 121
First active substance layer 122
First insulating adhesive layer 123
Negative electrode plate 13
Second current collector 131
Second active substance layer 132
Electrode terminal 20
Cell casing 30
Main body 31
First casing 311
First recess 3111
Second casing 312
Second recess 3112
First wall 313
Second wall 314
Third wall315
Fourth wall 316
Sealing portion 32
Fixing adhesive 101
First conductive member 40
Second conductive member 50
Second insulating adhesive layer 60
Battery 200
Electric device300
First direction X
Second direction Y
Third direction Z

This application is further described with reference to the accompanying drawings in the following specific embodiments.

### DESCRIPTION OF EMBODIMENTS

The following specific embodiments are exemplary and not restrictive, aiming to provide a basic understanding of this application but not to confirm critical or decisive elements of this application and not to limit the scope of protection. As long as there is no structural conflict, the various technical features mentioned in various embodiments can be combined in any manner.

When one component is assumed as being "disposed at/on/in" another component, the component may be provided directly at/on/in the another component or with a component possibly present therebetween. When one component is assumed as being "connected to" another component, it may be connected to the another component directly or with a component possibly present therebetween.

It can be understood that the term "vertical" is used to describe the ideal state between two components. During actual production or use, an approximately perpendicular or equal state may be present between the two components. For example, with reference to the description of numerical values, perpendicular may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

Unless otherwise defined, the term "multiple" in the specification specifically indicates that there are two or more components when used for describing the number of components.

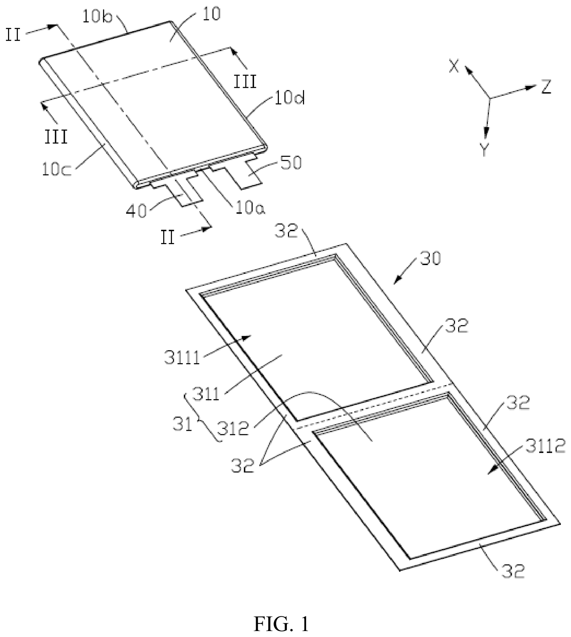

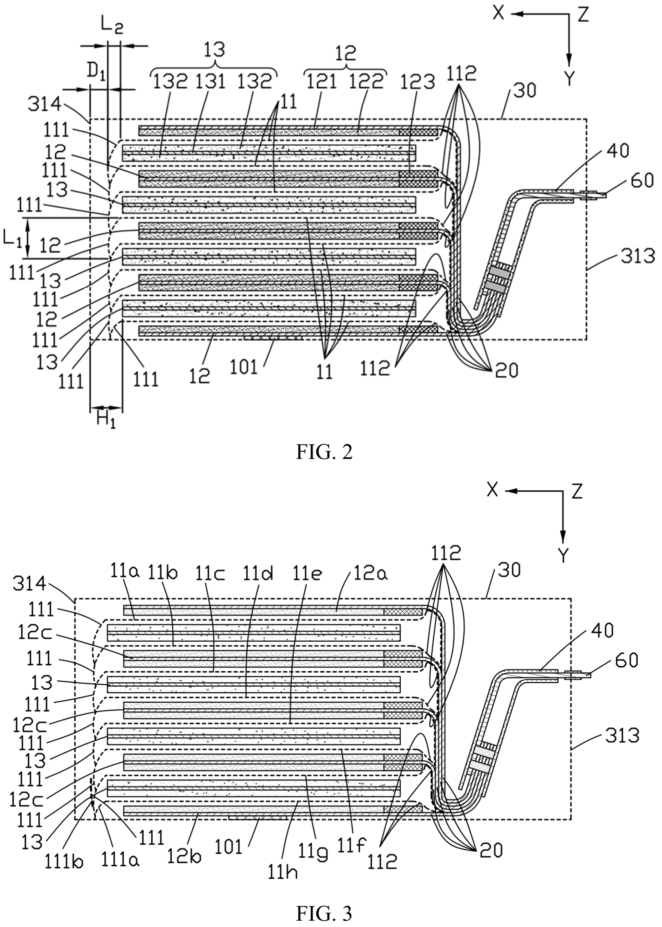

Please refer to FIGs. 1 and 2, an embodiment of this application provides a cell 100, including an electrode assembly 10 and an electrode terminal 20. The electrode assembly 10 includes a top 10a and a bottom 10b arranged along a first direction X. The electrode terminal 20 is configured to connect to the top 10a. The electrode assembly 10 is formed by winding or stacking, and the electrode assembly 10 includes N layers of separators 11, N being a natural number greater than or equal to 3. Each layer of separator 11 includes a first extension portion 111 extending out of the bottom 10b along the first direction X. The N layers of first extension portions 111 are arranged along the second direction Y. Along the second direction Y, the first extension portion 111 of the first layer to the first extension portion 111 of the (N-1)-th layer are bent, with adjacent ones of the first extension portions 111 connected. The separator 11 includes a second extension portion 112 extending out of the top 10a along a direction opposite to the first direction X. The second extension portion 112 is configured to connect to the electrode terminal 20. The second direction Y is a thickness direction of the electrode assembly 10. In this application, the first extension portions 111 from the first layer to the (N-1)-th layer are sequentially bent along the second direction Y, adjacent first extension portions 111 are connected, and the second extension portion 112 is configured to connect to the electrode terminal 20, achieving the fixation of the separators 11, reducing the space occupied by the cell 100 in the second direction Y and improving space utilization. This is conducive to increasing the energy density of the cell 100, and enhancing the tensile strength of the electrode terminal 20, thus reducing the risk of breakage of the electrode terminal 20 caused by swelling of the cell 100.

In some embodiments, in the direction opposite to the first direction X, the projection of the first extension portion 111 of the first layer does not overlap the projection of the first extension portion 111 of the N-th layer.

In some embodiments, in the direction opposite to the first direction X, the projection of the first extension portion 111 of the odd-numbered layer does not overlap the projection of the first extension portion 111 of the adjacent odd-numbered layer, which is conducive to improving space utilization. For example, the projection of the first extension portion 111 of the first layer does not overlap the projection of the first extension portion 111 of the third layer.

In some embodiments, when N is a natural number greater than or equal to 4, in the direction opposite to the first direction X, the projection of the first extension portion 111 of an even-numbered layer does not overlap the projection of the first extension portion 111 of an adjacent even-numbered layer, which is conducive to improving space utilization. For example, the projection of the first extension portion 111 of the second layer does not overlap the projection of the first extension portion 111 of the fourth layer.

In some embodiments, when the electrode assembly 10 is wound, the separator 11 extends in the first direction X, forming the first extension portion 111 and the second extension portion 112. The first extension portions 111 are sequentially bent, adjacent first extension portions 111 being connected, with the separators 11 on a side of the bottom 10b fixed, and the second extension portion 112 is configured to connect to the electrode terminal 20, with the separators 11 on a side of the top 10a fixed, enabling the separators 11 to be in an unfolded state along the first direction X, such that the multiple layers of separators 11 wound are connected to form an integral structure. This improves the overall mechanical performance of the separators 11, reducing the risk of short circuit caused by curling and displacement of the separators 11.

In some embodiments, the electrode assembly 10 includes a positive electrode plate 12 and a negative electrode plate 13, with the separator 11 disposed between the positive electrode plate 12 and the negative electrode plate 13. Optionally, the positive electrode plate 12, the separator 11, and the negative electrode plate 13 are sequentially wound. Optionally, the positive electrode plate 12, the separator 11, and the negative electrode plate 13 are sequentially stacked.

In some embodiments, the positive electrode plate 12 includes a first current collector 121 and a first active substance layer 122. Along the thickness direction of the electrode assembly 10, the first active substance layer 122 is configured to connect to surfaces of two sides of the first current collector 121. The electrode terminal 20 is configured to connect to the first current collector 121. Optionally, the electrode terminal 20 is welded to the first current collector 121. Optionally, along the first direction X, the electrode terminal 20 is formed by cutting the part of the first current collector 121 extending out of the first active substance layer 122.

In some embodiments, along the second direction Y, both sides of the part of the first current collector 121 extending out of the first active substance layer 122 are provided with a first insulating adhesive layer 123, which can protect the separator 11, reducing the risk that the burrs on the part of the first current collector 121 extending out of the first active substance layer 122 pierce the separator 11 and cause short circuit.

In some embodiments, the negative electrode plate 13 includes a second current collector 131 and a second active substance layer 132. Along the thickness direction of the electrode assembly 10, the second active substance layer 132 is configured to connect to surfaces of two sides of the second current collector 131. Along the second direction Y, part of the separator 11 is positioned between the first active substance layer 122 and the second active substance layer 132. Another electrode terminal 20 is configured to connect to the second current collector 131. Optionally, another electrode terminal 20 is welded to the second current collector 131. Optionally, along the first direction X, another electrode terminal 20 is formed by cutting the part of the second current collector 131 extending out of the second active substance layer 132.

In some embodiments, when the electrode assembly 10 is wound, the first current collector 121 may be connected to one electrode terminal 20, and the second current collector 131 may be connected to another electrode terminal 20.

In some embodiments, when the electrode assembly 10 is wound, the first current collector 121 may be connected to multiple electrode terminals 20, and the second current collector 131 may be connected to multiple electrode terminals 20.

In some embodiments, when the electrode assembly 10 is stacked, each first current collector 121 is configured to connect to at least one electrode terminal 20, and each second current collector 131 is configured to connect to at least one electrode terminal 20.

In some embodiments, the cell 100 includes a cell casing 30, and the cell casing 30 includes a main body 31 and a sealing portion 32. The main body 31 is provided with a receiving space, and the electrode assembly 10 is arranged in the receiving space. The sealing portion 32 seals the electrode assembly 10 within the main body 31, reducing the risk of electrolyte leakage.

Optionally, the main body 31 includes a first casing 311 and a second casing 312. The first casing 311 is provided with a first recess 3111, and the second casing 312 is provided with a second recess 3112. The first casing 311 is configured to connect to the second casing 312, forming a receiving space. The electrode assembly 10 has a portion disposed at the first recess 3111 and another portion disposed at the second recess 3112.

Optionally, the main body 31 includes a first casing 311 and a second casing 312. The first casing 311 is provided with a first recess 3111, and the second casing 312 is flat. The first casing 311 is configured to connect to the second casing 312, forming a receiving space. The electrode assembly 10 is arranged in the first recess 3111.

In some embodiments, the cell 100 includes a fixing adhesive 101, which can bond the electrode assembly 10 to the cell casing 30.

In some embodiments, the cell 100 includes an electrolyte, which is arranged within the cell casing 30. Part of the electrolyte infiltrates the positive electrode plate 12, the separator 11, and the negative electrode plate 13 to conduct charged ions, while part of the electrolyte is in a free state, attached to the surface of the cell casing 30 and/or the surface of the electrode assembly 10.

In some embodiments, the cell 100 includes a first conductive member 40, which is configured to connect to the electrode terminal 20. Optionally, when the electrode assembly 10 is a wound structure, the first conductive member 40 is configured to connect to the electrode terminal 20 of at least one layer of the positive electrode plate 12. Optionally, when the electrode assembly 10 is a stacked structure, the first conductive member 40 is configured to connect to the electrode terminal 20 of each layer of positive electrode plate 12.

In some embodiments, the cell 100 includes a second conductive member 50, which is configured to connect to another electrode terminal 20. Optionally, when the electrode assembly 10 is a wound structure, the second conductive member 50 is configured to connect to the electrode terminal 20 of at least one layer of the negative electrode plate 13. Optionally, when the electrode assembly 10 is a stacked structure, the second conductive member 50 is configured to connect to the electrode terminal 20 of each layer of negative electrode plate 13.

In some embodiments, the first conductive member 40 and the second conductive member 50 are configured for be connected to other devices to achieve the input and output of electrical energy.

In some embodiments, the cell 100 includes a second insulating adhesive layer 60, which covers part of the first conductive member 40 located in the cell casing 30, providing insulation for the first conductive member 40 and reducing the risk of short circuit. The second insulating adhesive layer 60 covers part of the second conductive member 50 located in the cell casing 30, providing insulation for the second conductive member 50, further reducing the risk of short circuit.

In some embodiments, along the second direction Y, surfaces of two sides of the first extension portion 111 are provided with a first adhesive layer (not shown in the figure). At a specific temperature, the first adhesive layer becomes sticky, and adjacent first extension portions 111 are sequentially adhered via the first adhesive layer. The first adhesive layer can be adhered to the electrode terminal 20. Optionally, the first adhesive layer includes polyvinylidene fluoride (PVDF). Optionally, the first adhesive layer softens and becomes sticky at 85°C to 95°C. Optionally, the first adhesive layer can soften at any one of 85°C, 86°C, 87°C, 88°C, 89°C, 90°C, 91°C, 92°C, 93°C, 94°C, and 95°C.

In some embodiments, along the second direction Y, surfaces of two sides of the separator 11 are provided with a first adhesive layer.

Refer to FIG. 2. In some embodiments, in the direction opposite to the first direction X, a projection of any first extension portion 111 overlaps a projection of an adjacent first extension portion 111, which can increase the connection area between adjacent first extension portions 111, enhancing the connection strength between adjacent first extension portions 111. In a case that first extension portions 111 of multiple layers of separators 11 extend out by the same length, a larger connection area between adjacent first extension portions 111 indicates a larger bending amplitude of the first extension portion 111 in the first direction X, reducing the space occupied by the first extension portion 111 in the first direction X. Optionally, the connection length of the first extension portion 111 with the adjacent first extension portion 111 is at least half of the length of the adjacent first extension portion 111. For example, the connection length of the first extension portion 111 of the first layer with the first extension portion 111 of the second layer is half of the length of the first extension portion 111 of the second layer.

Refer to FIGs. 2 and 3. In some embodiments, along the first direction X, the length of the first extension portion 111 of the N-th layer is less than the length of the first extension portion 111 of any one of the first layer to the (N-1)-th layer, reducing the space occupied by the first extension portion 111 of the N-th layer, which is conducive to improving space utilization.

In some embodiments, the first extension portion 111 of the N-th layer includes a first section 111a and a second section 111b. When the first extension portion 111 of the (N-1)-th layer is bent and connected to the first section 111a, the second section 111b is bent to the side of the first extension portion 111 of the (N-1)-th layer that is away from the positive electrode plate 12. In addition, the first extension portion 111 of the (N-1)-th layer is located between the bent first section 111a and the second section 111b, ensuring the connection strength between the first extension portion 111 of the (N-1)-th layer and the first extension portion 111 of the N-th layer. Cutting the second section 111b allows the length of the first extension portion 111 of the N-th layer along the first direction X to be less than the length of the first extension portion 111 of any one of the first layer to the (N-1)-th layer.

In some embodiments, along the first direction X, the length of the first extension portion 111 of the N-th layer is equal to the length of the first extension portion 111 of any one of the first layer to the (N-1)-th layer, which can enhance the connection strength between the first extension portion 111 of the N-th layer and the first extension portion 111 of the (N-1)-th layer, further enhancing the overall connection strength of the multiple first extension portions 111 bent and connected, which is conducive to fixing the separators 11. Optionally, the first extension portion 111 of the (N-1)-th layer is bent and connected to the first section 111a, and the second section 111b is bent and connected to the side of the first extension portion 111 of the (N-1)-th layer away from the positive electrode plate 12.

In some embodiments, a length L₁ of each layer of first extension portion 111 from the first layer to the (N-1)-th layer extending out of the bottom 10b along the first direction X satisfies 1.6 ≤ L₁ ≤ 2.9 mm, which is conducive to reducing the space occupied by the first extension portions 111. L₁ may be any one of 1.6 mm, 1.7 mm, 1.8 mm, 1.9 mm, 2.0 mm, 2.1 mm, 2.2 mm, 2.3 mm, 2.4 mm, 2.5 mm, 2.6 mm, 2.7 mm, 2.8 mm, and 2.9 mm.

In some embodiments, a length L₁ of each layer of first extension portion 111 from the first layer to the (N-1)-th layer extending out of the bottom 10b along the first direction X satisfies 0.2 mm ≤ L₁ < 2 mm, which is conducive to reducing the space occupied by the first extension portions 111. L₁ may be any one of 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.42 mm, 1.44 mm, 1.46 mm, 1.48 mm, 1.5 mm, 1.6 mm, 1.7 mm, 1.8 mm, 1.9 mm, 2.0 mm.

In an embodiment, the main body 31 includes a first wall 313 and a second wall 314 arranged along the first direction X. Along the first direction X, the first wall 313 is arranged opposite the bottom 10b, and the top 10a is arranged opposite the second wall 314. The first conductive member 40 and the second conductive member 50 extend out of the cell casing 30 from the second wall 314. Along the first direction X, a distance H₁ between the second wall 314 and the negative electrode plate 13 satisfies 0.1 mm ≤ H₁ ≤ 1.0 mm. H₁ may be any one of 0.1 mm, 0.2 mm, 0.3 mm, 0.4 mm, 0.5 mm, 0.6 mm, 0.7 mm, 0.8 mm, 0.9 mm, and 1.0 mm.

In some embodiments, along the first direction X, a length L₂ of each layer of first extension portion 111 extending out of the bottom 10b after bent and connected satisfies 0.1 mm ≤ L₂ ≤ 0.8 mm, further reducing the space occupied by the first extension portion 111 extending out of the negative electrode plate 13, which can increase the space between the second wall 314 and the first extension portion 111, helping to improve space utilization. L₂ may be any one of 0.1 mm, 0.2 mm, 0.3 mm, 0.4 mm, 0.5 mm, 0.6 mm, 0.7 mm, 0.8 mm. Along the first direction X, a distance D₁ between the second wall 314 and the first extension portion 111 satisfies 0 mm ≤ D₁ ≤ 0.4 mm, which can reduce the distance between the second wall 314 and the first extension portion 111 along the first direction X, improving space utilization, reducing the length of the cell 100 along the first direction X, and helping to increase the energy density of the cell 100. D₁ may be any one of 0 mm, 0.1 mm, 0.2 mm, 0.3 mm, and 0.4 mm. It can be understood that the space between the second wall 314 and the first extension portion 111 can still be configured for store part of the electrolyte.

In some embodiments, along the first direction X, a length L₂ of each layer of first extension portion 111 extending out of the bottom 10b after bent and connected satisfies 0.1 mm ≤ L₂ ≤ 0.3 mm, further reducing the space occupied by the first extension portion 111 extending out of the negative electrode plate 13, further increasing the space between the second wall 314 and the first extension portion 111, and helping to improve space utilization. L₂ may be any one of 0.1 mm, 0.2 mm, and 0.3 mm. Part of the electrolyte is located between the second wall 314 and the bottom 10b. Along the first direction X, the distance D₁ between the second wall 314 and the first extension portion 111 satisfies 0 mm ≤ D₁ ≤ 0.7 mm. With a fixed distance between the second wall 314 and the negative electrode plate 13, a smaller length L₂ of the first extension portion 111 extending out of the bottom 10b indicates a larger space between the second wall 314 and the first extension portion 111, increasing the space for storing the electrolyte, which is more conducive to reducing the risk of electrolyte swelling. D₁ may be any one of 0 mm, 0.1 mm, 0.2 mm, 0.3 mm, 0.4 mm, 0.5 mm, 0.6 mm, and 0.7 mm.

Refer to FIGs. 2 and 3. In some embodiments, the second extension portion 112 is configured to connect to the electrode terminal 20 connected to the positive electrode plate 12. Along the second direction Y, two outermost positive electrode plates 12 are the first positive electrode plate 12a and the second positive electrode plate 12b. A positive electrode plate 12 located between the first positive electrode plate 12a and the second positive electrode plate 12b is the third positive electrode plate 12c. The second extension portion 112 of the first layer is configured to connect to the electrode terminal 20 connected to the first positive electrode plate 12a. The second extension portion 112 of the N-th layer is configured to connect to the electrode terminal 20 connected to the second positive electrode plate 12b. The second extension portions 112 from the second layer to the (N-1)-th layer are connected to the electrode terminal 20 connected to the third positive electrode plate 12c. Along the second direction Y, each electrode terminal 20 connected to the third positive electrode plate 12c is configured to connect to a second extension portion 112 on both sides, which can enhance the tensile strength of the electrode terminal 20 connected to the positive electrode plate 12. Furthermore, each third positive electrode plate 12c is configured to connect to a second extension portion 112 on both sides, further enhancing the tensile strength of the electrode terminal 20 connected to each third positive electrode plate 12c, reducing the risk of breakage of the electrode terminal 20 caused by swelling of the cell 100.

In some embodiments, the second extension portion 112 is configured to connect to the electrode terminal 20 connected to the negative electrode plate 13. Along the second direction Y, each electrode terminal 20 connected to the negative electrode plate 13 is configured to connect to a second extension portion 112 on both sides, which can enhance the tensile strength of the electrode terminal 20 connected to the negative electrode plate 13, reducing the risk of breakage of the electrode terminal 20 caused by swelling of the cell 100.

In some embodiments, the second extension portion 112 is configured to connect to the electrode terminal 20 connected to the positive electrode plate 12, and the second extension portion 112 is configured to connect to the electrode terminal 20 connected to the negative electrode plate 13. Along the second direction Y, each electrode terminal 20 connected to the positive electrode plate 12 is configured to connect to a second extension portion 112, and each electrode terminal 20 connected to the negative electrode plate 13 is configured to connect to a second extension portion 112, which can enhance the tensile strength of each electrode terminal 20 connected to the electrode assembly 10, facilitating balanced force on each electrode terminal 20, further reducing the risk of breakage of the electrode terminal 20 caused by swelling of the cell 100.

In some embodiments, at least part of the second extension portion 112 connected to the electrode terminal 20 is configured to connect to another second extension portion 112 on an adjacent electrode terminal 20, which can further enhance the tensile strength of the electrode terminal 20, further reducing the risk of breakage of the electrode terminal 20 caused by swelling of cell 100.

Refer to FIGs. 2 and 3. Taking the second extension portion 112 being connected to the electrode terminal 20 connected to the positive electrode plate 12 as an example, optionally, the separator 11 includes a first-layer separator 11a, a second-layer separator 11b, a third-layer separator 11c, a fourth-layer separator 11d, a fifth-layer separator 11e, a sixth-layer separator 11f, a seventh-layer separator 11g, and an eighth-layer separator 11h. A second extension portion 112 of the first-layer separator 11a is configured to connect to a second extension portion 112 of the second-layer separator 11b. A second extension portion 112 of the third-layer separator 11c is configured to connect to a second extension portion 112 of the fourth-layer separator 11d. A second extension portion 112 of the fifth-layer separator 11e is configured to connect to a second extension portion 112 of the sixth-layer separator 11f. A second extension portion 112 of the seventh-layer separator 11g is configured to connect to a second extension portion 112 of the eighth-layer separator 11h.

In some embodiments, the connection length of the second extension portion 112 with the electrode terminal 20 is W (not shown in the figure), and W satisfies 1 mm ≤ W ≤ 3 mm, which can enhance the connection strength between the second extension portion 112 and the electrode terminal 20, enhancing the tensile strength of the electrode terminal 20. W may be any one of 1.0 mm, 1.1 mm, 1.2 mm, 1.3 mm, 1.4 mm, 1.5 mm, 1.6 mm, 1.7 mm, 1.8 mm, 1.9 mm, 2.0 mm, 2.1 mm, 2.2 mm, 2.3 mm, 2.4 mm, 2.5 mm, 2.6 mm, 2.7 mm, 2.8 mm, 2.9 mm, and 3.0 mm. Optionally, the length of the second extension portion 112 extending out of the positive electrode plate 12 may be the connection length W of the second extension portion 112 with the electrode terminal 20. Optionally, the length of the second extension portion 112 extending out of the positive electrode plate 12 can be slightly greater than the connection length W of the second extension portion 112 with the electrode terminal 20.

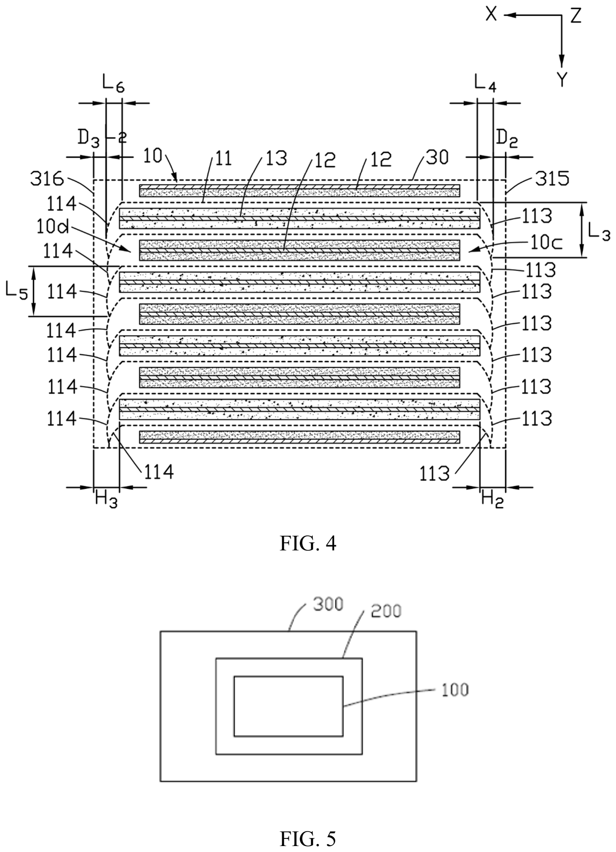

Refer to FIGs. 1 and 4. In some embodiments, the electrode assembly 10 includes a first side portion 10c and a second side portion 10d arranged along the third direction Z, with the first direction X, the second direction Y, and the third direction Z being mutually perpendicular. When the electrode assembly 10 is stacked, each layer of separator 11 includes a third extension portion 113, and the N layers of third extension portions 113 extend out of the first side portion 10c in a direction opposite to the third direction Z. Each layer of third extension portion 113 is arranged along the second direction Y. Along the second direction Y, the third extension portion 113 of the first layer to the third extension portion 113 of the (N-1)-th layer are bent, with adjacent ones of the third extension portions 113 connected. The third extension portions 113 from the first layer to the (N-1)-th layer are sequentially bent along the second direction Y and adjacent third extension portions 113 are connected, which can achieve fixation of the separators 11 extending out of the first side portion 10c, reducing the space occupied by the cell 100 in the second direction Y, improving space utilization, and helping to increase the energy density of the cell 100.

In some embodiments, along the third direction Z, the projection of the third extension portion 113 of the first layer does not overlap the projection of the third extension portion 113 of the N-th layer.

In some embodiments, in the direction opposite to the third direction Z, the projection of the third extension portion 113 overlaps the projection of an adjacent third extension portion 113, which can increase the connection area between adjacent third extension portions 113, enhancing the connection strength between adjacent third extension portions 113. In a case that the third extension portions 113 of multiple layers of separators 11 extend out by the same length, a larger connection area between adjacent third extension portions 113 indicates a larger bending amplitude of the third extension portion 113 in the third direction Z, reducing the space occupied by the third extension portion 113 in the third direction Z. Optionally, the connection length of the third extension portion 113 with the adjacent third extension portion 113 is at least half of the length of the adjacent third extension portion 113. For example, the connection length of the third extension portion 113 of the first-layer separator with the third extension portion 113 of the second-layer separator is half of the length of the third extension portion 113 of the second-layer separator.

In some embodiments, in the direction opposite to the third direction Z, the length of the third extension portion 113 of the N-th layer is less than the length of the third extension portion 113 of any one of the first layer to the (N-1)-th layer, reducing the space occupied by the third extension portion 113 of the N-th layer, which is conducive to improving space utilization. Optionally, the third extension portion 113 is cut in the same manner as the first extension portion 111, making the length of the third extension portion 113 of the N-th layer in the direction opposite to the third direction Z less than the length of the third extension portion 113 of any one of the first layer to the (N-1)-th layer.

In some embodiments, in the direction opposite to the third direction Z, the length of the third extension portion 113 of the N-th layer is equal to the length of the third extension portion 113 of any one of the first layer to the (N-1)-th layer, which can enhance the connection strength between the third extension portion 113 of the N-th layer and the third extension portion 113 of the (N-1)-th layer, further enhancing the overall connection strength of the multiple third extension portions 113 bent and connected, which is conducive to fixing the separator 11.

In some embodiments, a length L₃ (not shown in the figure) of the third extension portions 113 from the first layer to the (N-1)-th layer satisfies 1.6 ≤ L₃ ≤ 2.9 mm, which is conducive to reducing the space occupied by the third extension portions 113. L₃ may be any one of 1.6 mm, 1.7 mm, 1.8 mm, 1.9 mm, 2.0 mm, 2.1 mm, 2.2 mm, 2.3 mm, 2.4 mm, 2.5 mm, 2.6 mm, 2.7 mm, 2.8 mm, and 2.9 mm.

In some embodiments, the length L₃ of the third extension portions 113 from the first layer to the (N-1)-th layer satisfies 1 mm ≤ L₃ < 1.5 mm, further reducing the space occupied by the third extension portions 113. L₃ may be any one of 1.0 mm, 1.1 mm, 1.2 mm, 1.3 mm, 1.4 mm, 1.42 mm, 1.44 mm, 1.46 mm, and 1.48 mm.

In an embodiment, the main body 31 includes a third wall 315 and a fourth wall 316 arranged along the third direction Z. Along the third direction Z, the third wall 315 is arranged opposite the first side portion 10c, and the second side portion 10d is arranged opposite the fourth wall 316. Part of the electrolyte is located between the third wall 315 and the first side portion 10c. Along the third direction Z, a distance H₂ between the third wall 315 and the negative electrode plate 13 satisfies 0.1 mm ≤ H₂ ≤ 1.0 mm. H₂ may be any one of 0.1 mm, 0.2 mm, 0.3 mm, 0.4 mm, 0.5 mm, 0.6 mm, 0.7 mm, 0.8 mm, 0.9 mm, and 1.0 mm.

In some embodiments, along the first direction X, the length L₂ of each layer of third extension portion 113 extending out of the first side portion 10c after bent and connected satisfies 0.1 mm ≤ L₄ ≤ 0.6 mm, further reducing the space occupied by the third extension portion 113 extending out of the negative electrode plate 13, which can increase the space between the third wall 315 and the third extension portion 113, improving space utilization. L₄ may be any one of 0.1 mm, 0.2 mm, 0.3 mm, 0.4 mm, 0.5 mm, and 0.6 mm. Along the third direction Z, a distance D₂ between the third wall 315 and the third extension portion 113 satisfies 0 mm ≤ D₂ ≤ 0.4 mm, which can reduce the distance between the third wall 315 and the third extension portion 113 along the third direction Z, improving space utilization, reducing the width of the cell 100 along the third direction Z, and helping to increase the energy density of the cell 100. D₂ may be any one of 0 mm, 0.1 mm, 0.2 mm, 0.3 mm, and 0.4 mm. It can be understood that the space between the third wall 315 and the third extension portion 113 can still be used for storing part of the electrolyte.

In some embodiments, along the first direction X, the length L₄ of each layer of third extension portion 113 extending out of the first side portion 10c after bent and connected satisfies 0.1 mm ≤ L₄ ≤ 0.3 mm, further reducing the space occupied by the third extension portion 113 extending out of the negative electrode plate 13, further increasing the space between the third wall 315 and the third extension portion 113, and further improving space utilization. L₄ may be any one of 0.1 mm, 0.2 mm, and 0.3 mm. Part of the electrolyte is located between the third wall 315 and the third extension portion 113. Along the third direction Z, the distance D₂ between the third wall 315 and the third extension portion 113 satisfies 0 mm ≤ D₂ ≤ 0.7 mm. In a case of a fixed distance between the third wall 315 and the third extension portion 113, a smaller length L₄ of the third extension portion 113 extending out of the first side portion 10c indicates a larger space between the third wall 315 and the third extension portion 113, increasing the space for storing the electrolyte, which is more conducive to reducing the risk of electrolyte swelling. D₂ may be any one of 0 mm, 0.1 mm, 0.2 mm, 0.3 mm, 0.4 mm, 0.5 mm, 0.6 mm, and 0.7 mm.

In some embodiments, when the electrode assembly 10 is stacked, each layer of separator 11 includes a fourth extension portion 114, with the fourth extension portion 114 extending out of the second side portion 10d along the third direction Z. Each layer of fourth extension portion 114 is arranged along the second direction Y. Along the second direction Y, the fourth extension portion 114 of the first layer to the fourth extension portion 114 of the (N-1)-th layer are bent, with adjacent ones of the fourth extension portions 114 connected. The fourth extension portions 114 from the first layer to the (N-1)-th layer are sequentially bent along the second direction Y and adjacent fourth extension portions are connected, which can achieve fixation of the separators 11 extending out of the second side portion 10d, further reducing the space occupied by the cell 100 in the second direction Y, further improving space utilization, and further helping to increase the energy density of the cell 100.

In some embodiments, in the direction opposite to the third direction Z, the projection of the fourth extension portion 114 of the first-layer separator does not overlap the projection of the fourth extension portion 114 of the N-layer separator.

In some embodiments, along the third direction Z, the projection of the fourth extension portion 114 overlaps the projection of an adjacent fourth extension portion 114, which can increase the connection area between adjacent fourth extension portions 114, enhancing the connection strength between adjacent fourth extension portions 114. In a case that the fourth extension portions 114 of multiple layers of separators 11 extend out by the same length, a larger connection area between adjacent fourth extension portions 114 indicates a larger bending amplitude of the fourth extension portion 114 in the third direction Z, reducing the space occupied by the fourth extension portion 114 in the third direction Z. Optionally, the connection length of the fourth extension portion 114 with the adjacent fourth extension portion 114 is at least half of the length of the adjacent fourth extension portion 114. For example, the connection length of the fourth extension portion 114 of the first layer with the fourth extension portion 114 of the second layer is half of the length of the fourth extension portion 114 of the second layer.

In some embodiments, in the third direction Z, the length of the fourth extension portion 114 of the N-th layer is less than the length of the fourth extension portion 114 of any one of the first layer to the (N-1)-th layer, reducing the space occupied by the fourth extension portion 114 of the N-th layer, which is conducive to improving space utilization. Optionally, the fourth extension portion 114 is cut in the same manner as the first extension portion 111, making the length of the fourth extension portion 114 of the N-th layer in the third direction Z less than the length of the fourth extension portion 114 of any one of the first layer to the (N-1)-th layer.

In some embodiments, in the third direction Z, the length of the fourth extension portion 114 of the N-th layer is equal to the length of the fourth extension portion 114 of any one of the first layer to the (N-1)-th layer, which can enhance the connection strength between the fourth extension portion 114 of the N-th layer and the fourth extension portion 114 of the (N-1)-th layer, further enhancing the overall connection strength of the multiple fourth extension portions 114 bent and connected and helping to conducive to fixing the separator 11.

In some embodiments, a length L₅ (not shown in the figure) of fourth extension portions 114 from the first layer to the (N-1)-th layer satisfies 1.6 ≤ L₅ ≤ 2.9 mm, which is conducive to reducing the space occupied by the fourth extension portions 114. L₅ may be any one of 1.6 mm, 1.7 mm, 1.8 mm, 1.9 mm, 2.0 mm, 2.1 mm, 2.2 mm, 2.3 mm, 2.4 mm, 2.5 mm, 2.6 mm, 2.7 mm, 2.8 mm, and 2.9 mm.

In some embodiments, the length L₅ of the fourth extension portions 114 from the first layer to the (N-1)-th layer satisfies 1 mm ≤ L₅ < 1.5 mm, further reducing the space occupied by the fourth extension portions 114. L₅ may be any one of 1.0 mm, 1.1 mm, 1.2 mm, 1.3 mm, 1.4 mm, 1.42 mm, 1.44 mm, 1.46 mm, and 1.48 mm.

In an embodiment, along the third direction Z, a distance H₃ between the fourth wall 316 and the negative electrode plate 13 satisfies 0.1 mm ≤ H₃ ≤ 1.0 mm. H₃ can be any one of 0.1 mm, 0.2 mm, 0.3 mm, 0.4 mm, 0.5 mm, 0.6 mm, 0.7 mm, 0.8 mm, 0.9 mm, and 1.0 mm.

In some embodiments, along the first direction X, a length L₆ of each layer of fourth extension portion 114 extending out of the second side portion 10d after bent and connected satisfies 0.1 mm ≤ L₆ ≤ 0.6 mm, further reducing the space occupied by the fourth extension portion 114 extending out of the negative electrode plate 13, which can increase the space between the fourth wall 316 and the fourth extension portion 114, helping to improve space utilization. L₆ may be any one of 0.1 mm, 0.2 mm, 0.3 mm, 0.4 mm, 0.5 mm, and 0.6 mm. Along the third direction Z, the distance D₃ between the fourth wall 316 and the second side portion 10d satisfies 0 mm ≤ D₃ ≤ 0.4 mm, which can reduce the distance between the fourth wall 316 and the second side portion 10d along the third direction Z, improving space utilization, further reducing the width of the cell 100 along the third direction Z, and helping to increase the energy density of the cell 100. D₃ may be any one of 0 mm, 0.1 mm, 0.2 mm, 0.3 mm, and 0.4 mm. It can be understood that the space between the fourth wall 316 and the second side portion 10d can still be used for storing part of the electrolyte.

In some embodiments, along the first direction X, the length L₆ of each layer of fourth extension portion 114 extending out of the second side portion 10d after bent and connected satisfies 0.1 mm ≤ L₆ ≤ 0.3 mm, further reducing the space occupied by the fourth extension portion 114 extending out of the negative electrode plate 13, further increasing the space between the cell casing 30 and the fourth extension portion 114, and further helping to improve space utilization. L₆ may be any one of 0.1 mm, 0.2 mm, and 0.3 mm. Part of the electrolyte is located between the fourth wall 316 and the second side portion 10d. Along the third direction Z, the distance D₃ between the fourth wall 316 and the second side portion 10d satisfies 0 mm ≤ D₃ ≤ 0.7 mm. In a case of a fixed distance between the fourth wall 316 and the second side portion 10d, a smaller length L₆ of the fourth extension portion 114 extending out of the second side portion 10d indicates a larger space between the fourth wall 316 and the second side portion 10d, increasing the space for storing the electrolyte, which is more conducive to reducing the risk of electrolyte swelling. D₃ may be any one of 0 mm, 0.1 mm, 0.2 mm, 0.3 mm, 0.4 mm, 0.5 mm, 0.6 mm, and 0.7 mm.

In some embodiments, when the electrode assembly 10 is stacked, the separator 11 extends in the first direction X, forming the first extension portion 111 and the second extension portion 112. The separator 11 extends in the third direction Z, forming the third extension portion 113 and the fourth extension portion 114. The first extension portions 111 are sequentially bent, adjacent first extension portions 111 being connected, with the separators 11 on a side of the bottom 10b fixed, the second extension portion 112 is configured to connect to the electrode terminal 20, with the separators 11 on a side of the top 10a fixed, the third extension portions 113 are sequentially bent, adjacent third extension portions 113 being connected, with separators 11 on a side of the first side portion 10c fixed, and the fourth extension portions 114 are sequentially bent, adjacent fourth extension portions 114 being connected, with the separators 11 on a side of the second side portion 10d fixed. This allows the separator 11 to be in an unfolded state along both the first direction X and the third direction Z, such that multiple layers of separators 11 wound are connected to form an integral structure, enhancing the overall mechanical performance of the separator 11 and reducing the risk of short circuit caused by curling and displacement of the separators 11.

This application is further described below with reference to specific embodiments.

For example, the electrode assembly 10 is a stacked structure, the bottom 10b, the first side portion 10c, and the second side portion 10d of the electrode assembly 10 of an existing cell containing a winding adhesive are all provided with a winding adhesive, the cell 100 being in a dimension of 4.9 mm (thickness) * 62 mm (width) * 68 mm (length).

| | Cell containing winding adhesive | Cell in this application (containing no winding adhesive) |
|---|---|---|
| Winding adhesive (bottom) | 20 µm | / |
| Winding adhesive (first side portion) | 20 µm | / |
| Winding adhesive (second side portion) | 20 µm | / |
| Fixing adhesive | 10 µm | 10 µm |
| Thickness reduction amount | None | 30 µm |
| Energy density gain | None | 0.60% |
| Low capacity of cell | 2% | None |
| Drop performance | / | No difference from the cell containing winding adhesive |

It can be seen from the above table, in this application, on the side of the electrode assembly 10 containing no the fixing adhesive 101, along the second direction Y, the thickness of each winding adhesive can be reduced by 10 µm, thereby reducing the space occupied by the cell 100 in the second direction Y, improving space utilization, and increasing the energy density of the cell 100. In this application, the second extension portion 112 is configured to connect to the electrode terminal 20, which can enhance the tensile strength of the electrode terminal 20 and reduce the risk of low capacity of cell caused by the breakage of the electrode terminal 20.

Refer to FIG. 5. This application further provides a battery 200 using the cell 100 according to any of the above embodiments. Specifically, optionally, the battery 200 may be a lithium secondary battery, including a lithium metal secondary battery, a lithium-ion secondary battery, a lithium polymer secondary battery, and a lithium-ion polymer secondary battery.

Refer to FIG. 5. This application further provides an electric device 300 using the foregoing battery 200. In an embodiment, the electric device 300 in this application may be but is not limited to an electronic device, a drone, a backup power source, an electric vehicle, an electric motorcycle, an electric motor bicycle, an electric tool, and a large household battery module.

Those of ordinary skill in the art should appreciate that the foregoing embodiments are for description of this application only but not for limiting this application. Appropriate modifications and variations made to the foregoing embodiments without departing from the essential spirit and scope of this application all fall within the scope of this application.

## Claims

1. A cell, comprising an electrode assembly and an electrode terminal, wherein
the electrode assembly comprises a top and a bottom arranged along a first direction, and the electrode terminal is configured to connect to the top;
the electrode assembly is formed by winding or stacking, and the electrode assembly comprises N layers of separators, N being a natural number greater than or equal to 3;
each layer of the separator comprises a first extension portion extending out of the bottom along the first direction, the N layers of the first extension portions are arranged along a second direction, and along the second direction, the first extension portion of the first layer to the first extension portion of the (N-1)-th layer are bent, with adjacent ones of the first extension portion connected;
the separator comprises a second extension portion extending out of the top along a direction opposite to the first direction, the second extension portion being connected to the electrode terminal; and
the second direction is a thickness direction of the electrode assembly.

2. The cell according to claim 1, wherein in the direction opposite to the first direction, a projection of any one of the first extension portions overlaps a projection of an adjacent first extension portion.

3. The cell according to claim 1, wherein at least part of the second extension portion connected to the electrode terminal is configured to connect to another second extension portion on an adjacent electrode terminal.

4. The cell according to claim 1, wherein the electrode assembly comprises a first side portion and a second side portion arranged along a third direction, and when the electrode assembly is stacked, each layer of the separator comprises a third extension portion extending out of the first side portion in a direction opposite to the third direction, wherein the N layers of the third extension portions are arranged along the second direction, and along the second direction, the third extension portion of the first layer to the third extension portion of the (N-1)-th layer are bent, with adjacent ones of the third extension portions connected, each two of the first direction, second direction, and third direction being mutually perpendicular.

5. The cell according to claim 4, wherein each layer of the separators comprises a fourth extension portion extending out of the second side portion along the third direction, wherein the N layers of the fourth extension portions are arranged along the second direction, and along the second direction, the fourth extension portion of the first layer to the fourth extension portion of the (N-1)-th layer are bent, with adjacent ones of the fourth extension portions connected.

6. The cell according to claim 1, wherein a length L₁ of each layer of the first extension portion from the first layer to the (N-1)-th layer extending out of the bottom along the first direction satisfies 0.2 mm ≤ L₁ < 2 mm.

7. The cell according to claim 6, wherein a length L₂ of each layer of the first extension portion extending out of the bottom after bent and connected along the first direction satisfies 0.1 mm ≤ L₂ ≤ 0.8 mm.

8. The cell according to claim 7, wherein the cell comprises a cell casing and an electrolyte, the electrode assembly is arranged within the cell casing, the cell casing comprises a first wall and a second wall arranged along the first direction, part of the electrolyte is located between the second wall and the first extension portion, and along the first direction, a distance D₁ between the second wall and the first extension portion satisfies 0 mm ≤ D₁ ≤ 0.4 mm.

9. The cell according to claim 7, wherein a length L₂ of each layer of first extension portion extending out of the bottom after bent and connected along the first direction satisfies 0.1 mm ≤ L2 ≤ 0.3 mm.

10. The cell according to claim 9, wherein the cell comprises a cell casing and an electrolyte, the electrode assembly is arranged within the cell casing, the cell casing comprises a first wall and a second wall arranged along the first direction, part of the electrolyte is located between the second wall and the first extension portion, and along the first direction, a distance D₁ between the second wall and the first extension portion satisfies 0 mm ≤ D₁ ≤ 0.7 mm.

11. The cell according to claim 1, wherein along the first direction, a length of the first extension portion of the N-th layer is less than a length of the first extension portion of any one of the first layer to the (N-1)-th layer.

12. The cell according to claim 1, wherein the first extension portion is provided with a first adhesive layer, such that adjacent ones of the first extension portions are adhesively arranged.

13. The cell according to claim 1, wherein the electrode assembly comprises a positive electrode plate and a negative electrode plate, the positive electrode plate, the separator, and the negative electrode plate are sequentially wound or stacked, the positive electrode plate comprises a first current collector and a first active substance layer, along the thickness direction of the electrode assembly, the first active substance layer is configured to connect to surfaces of two sides of the first current collector, and a first insulating adhesive layer is disposed on both sides of part of the first current collector extending out of the first active substance layer.

14. A battery, comprising the cell according to any one of claims 1 to 13.

15. An electric device, comprising the battery according to claim 14.
